# EUROPÄISCHE PATENTANMELDUNG

(11) **EP 3 940 316 A1**
(43) Veröffentlichungstag der Anmeldung: **19.01.2022**
(21) Anmeldenummer: 21185005.2
(22) Anmeldetag: 12.07.2021
(51) Int. Cl.: F25B 30/00, G01M 3/04, G01M 3/10, G01M 3/12, G01N 21/77, G01N 31/22

(54) **PHASENWECHSELANZEIGE**

(30) Priorität: 16.07.2020 DE 102020118793
(71) Anmelder: Vaillant GmbH, 42859 Remscheid (DE)
(72) Erfinder: Wohlfeil, Arnold, 42799 Leichlingen (DE)
(74) Vertreter: Popp, Carsten

(57) **Zusammenfassung**

Anzeigevorrichtung für ein geschlossenes Wärmepumpengehäuse, in dem ein Wärmepumpenprozess mit einem entzündlichen, kohlenstoffhaltigen Arbeitsfluid betrieben wird, bei dem ein beheiztes Sichtfenster formschlüssig in einer Aussparung an einer der Außenwände des Wärmepumpengehäuses angebracht ist, das Sichtfenster mit dem Gas-Innenraum des Gehäuses in Verbindung steht, das Sichtfenster auf der ins Innere des Gehäuses gerichteten Oberfläche mit einer lichtabsorbierenden Feststoff-Beschichtung versehen ist, das gasförmige Arbeitsfluid in der Feststoff-Beschichtung löslich ist, die Beschichtung beim Lösen des gasförmigen Arbeitsfluides flüssig wird und abläuft, und dabei den Blick ins Gehäuseinnere freigibt.

## Beschreibung

Die Erfindung betrifft die Anzeige irregulärer Zustände in Kältekreisen, in denen ein als Kältemittel wirkendes Arbeitsfluid in einem linksdrehendem thermodynamischen Kreisprozess, wie zum Beispiel dem Clausius-Rankine-Kreisprozess, bei Kleinkraftwerken in einem ORC ― Organic Rankine Cycle, oder auch einem Kalina-Prozess, geführt wird, sowie deren Sicherheitseinrichtung. Vorwiegend sind dies innen aufgestellte Wärmepumpen, aber auch Klimaanlagen und Kühlgeräte, wie sie in Wohngebäuden gebräuchlich sind. Unter Wohngebäuden werden dabei Privathäuser, Miethauskomplexe, Krankenhäuser, Hotelanlagen, Gastronomie und kombinierte Wohn- und Geschäftshäuser verstanden, in denen Menschen dauerhaft leben und arbeiten, im Unterschied zu mobilen Vorrichtungen wie KFZ-Klimaanlagen oder Transportboxen, oder auch Industrieanlagen oder medizintechnischen Geräten. Gemeinsam ist diesen Kreisprozessen, dass sie unter Einsatz von Energie Nutzwärme oder Nutzkälte erzeugen und Wärmeverschiebungssysteme bilden.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen bestanden. Es zeigte sich jedoch, dass diese Sicherheitskältemittel zur Klimaerwärmung führen und dass ihre sicherheitstechnische Unbedenklichkeit zu konstruktiven Unachtsamkeiten führte. Bis zu 70 % des Umsatzes entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Heutige Kältekreise sind ausgestattet mit diesen Sicherheitskältemitteln der Sicherheitsklasse A1, d.h. sie sind nicht giftig und nicht brennbar. Die gebräuchlichsten Kältemittel im Bereich der Wärmepumpenanwendungen sind die Kältemittel R134a, R407C bzw. R410A, allesamt Fluorkohlenwasserstoffverbindungen. Der Einsatz dieser Kältemittel war bis Januar 2015 keinerlei Restriktionen unterworfen, die Einführung der F-Gase-Verordnung (EU) 517/2014 zum 01. Januar 2015 schränkt zukünftig die Anwendung von Fluorkohlenwasserstoff-Kältemitteln über Mengenbegrenzungen in der Europäischen Union derartig ein, dass die Preise bisheriger Kältemittel deutlich ansteigen werden. Ziel der F-Gase-Verordnung ist die mittelfristige Verbannung der treibhausgasfördernden Kältemittel und den Ersatz durch natürliche Kältemittel bzw. gegen chemische Kältemittel mit erheblich reduziertem Treibhauspotenzial. Einschlägig ist auch die Norm EN 378 und ihre Vorgaben zur Aufstellung.

Nachteilig ist jedoch, dass nahezu alle Kältemittelalternativen zur Gruppe der brennbaren oder giftigen Kältemittel gehören, insbesondere die technisch vielversprechendsten Kältemittel wie z.B. R290 (Propan) und R1270 (Propylen). R170 (Ethan), R717 (Ammoniak), R600 (n-Butan), R600a (Isobutan), R245fa (1,1,1,3,3 Pentafluorpropan), R723 (Dimethylether/ Ammoniak), R744a (Distickstoffmonoxid) sowie Mischungen aus diesen Kältemitteln und vielen anderen.

Dies führt zu Sicherheitsproblemen bei Leckagen im Arbeitsfluidkreislauf. Sofern sich das Arbeitsfluid in einem Gehäuse befindet, ist eine Leckage nicht direkt sichtbar. Bei einem unbemerkten Ausfall elektronischer Detektionssysteme könnte sich eine Notsituation einstellen, die von außen nicht erkennbar und einschätzbar ist. Dies würde vor allem das Wartungspersonal betreffen, das das Gehäuse öffnen muss.

Ein technisch ähnliches Problem besteht auf einem anderen Gebiet, welches Opferandoen in Heizkörpern betrifft. Die CH 556 522 A beschreibt solche Opferanoden in Heizkörpern, die austauschbar sind und bei denen das Problem besteht, dass man von außen sehen können soll, ob sie verbraucht sind oder noch nicht. Hierzu dient ein transparenter Verschlussstopfen. Zwischen dem oberen Rand des Verschlussstopfens und dem Innenflansch des Rohrstutzens ist eine poröse oder perforierte Thermoplastplatte eingespannt. Im oberen Teil des Verschlussstopfens befindet sich die Opferanode, im unteren Teil befindet sich ein Schauglas, welches mit einer Schicht versehen ist, deren Farbe sich ändert, wenn sie mit Wasser in Kontakt kommt. Ist die Opferanode verbraucht, kann Wasser eindringen und das Schauglas zeigt den Farbumschlag an.

Auch in Absorptionswärmepumpen, die mit Ammoniak als Arbeitsfluid betrieben werden, kann die Methode des Farbumschlags genutzt werden, um einen Eintrag in den Heizungskreislauf anzuzeigen. Die DE 31 11 961 A1 beschreibt eine Kupfer-Molybdän-Verbindung auf einer Adsorptionsmatrix, die hinter einem Schauglas positioniert ist, und die in Anwesenheit von Ammoniak in Wasser je nach Konzentration durch Farbumschläge über gelb, grün bis zu blau zeigt. So etwas Schönes gibt es leider für die oben genannten Arbeitsfluid in der Luft eines Wärmepumpengehäuses nicht.

Die Aufgabe der Erfindung ist daher, eine Vorrichtung bereitzustellen, die Arbeitsfluid, welches aufgrund einer Leckage aus dem Arbeitsfluidkreislauf in ein Wärmepumpengehäuse ausgetreten ist, von außen anzeigt.

Die Erfindung löst die Aufgabe mittels einer Anzeigevorrichtung für ein geschlossenes Wärmepumpengehäuse, in dem ein Wärmepumpenprozess mit einem entzündlichen kohlenstoffhaltigen Arbeitsfluid betrieben wird, wobei
- ein beheiztes Sichtfenster formschlüssig in einer Aussparung an einer der Außenwände des Wärmepumpengehäuses angebracht ist,
- das Sichtfenster mit dem Gas-Innenraum des Gehäuses in Verbindung steht,
- das Sichtfenster auf der ins Innere des Gehäuses gerichteten Oberfläche mit einer lichtabsorbierenden Feststoff-Beschichtung versehen ist,
- das gasförmige Arbeitsfluid in der Feststoff-Beschichtung löslich ist,
- die Beschichtung beim Lösen des gasförmigen Arbeitsfluides flüssig wird und abläuft,
- und dabei den Blick ins Gehäuseinnere freigibt.

Das Lösen des gasförmigen Arbeitsfluids im erfordert eine Abstimmung der Beschichtung mit dem Arbeitsfluid. Diese Beschichtung ist dabei aus Wachs oder wachsartigem Material, auch eine ionische Flüssigkeit mit sehr hoher Zähigkeit ist möglich. Ausgestaltungen der Erfindung betreffen daher die Beschichtung in Abhängigkeit des gewählten Arbeitsfluids im Wärmepumpenprozess. In einer Ausgestaltung ist vorgesehen, für das Arbeitsfluid R290 oder R600a ein Wachs aus Dodecansäure, die auch als Laurinsäure bezeichnet wird, und Tetradecansäure, die auch als Myristinsäure bezeichnet wird, zu verwenden. Die entsprechenden Stoffwerte kann der Fachmann der Veröffentlichung "Hiroyuki Enomoto, Kouji Maeda, Keisuke Fukui, Syouji Hirota, Vapor-Liquid-Solid Equilibria for the System Propane or 2-Methylpropane + Dodecanoic Acid + Tetradecanoic Acid", J. Chem Eng. Data 1997, 42, 791-794" entnehmen. In derselben Weise kann das Wachs auch aus Stearinsäure oder Palmitinsäure gebildet werden. Sobald sich R290 oder R600a in einem solchen Gemisch löst, wird der Schmelzpunkt herabgesetzt und die Beschichtung fließt ab.

Um die Empfindlichkeit der Methode zu steigern, kann die Beheizung des Sichtfensters bis knapp unter den Schmelzpunkt des Wachses vorgenommen werden. Die Schmelzpunkte von Laurinsäure sind 44°C, von Myristinsäure 55°C, von Palmitinsäure 63°C und von Stearinsäure 69°C. Die Beheizung sollte vorzugsweise auf eine Temperatur von 0,5 bis 3 Kelvin unterhalb des jeweiligen Schmelzpunktes erfolgen. Im Idealfall wird Laurinsäure mit einer Beheizungstemperatur von 43,5°C als Beschichtung am Sichtfenster verwendet. In einer weiteren Ausgestaltung wird dem Wachs ein dunkler Farbstoff beigemischt, der das Wachs undurchsichtig für Licht macht, solche Farbstoffe sind für Wachskerzen gebräuchlicher Stand der Technik.

Als Sichtfenster kann eine flache Glasscheibe genutzt werden, jedoch ist ein Bullauge, wie es auch bei typischen Ölstandsaugen aus Polyamid-Kunststoff eingesetzt wird, vorzuziehen.

Die Beheizung des Sichtfensters erfolgt vorzugsweise durch einen Heizdraht oder ein Heizgitter, welches auf dem Sichtfenster aufgebracht oder in diesem eingelassen ist. Im Normalfall wird die Heizung auf eine Temperatur knapp unterhalb des Schmelzpunktes eingestellt. Zur Überprüfung, ob diese Temperatur anliegt, kann ein Temperaturmesssensor vorgesehen werden, der die Temperatur überwacht, ferner kann ein Regelkreis vorgesehen werden, der sicherstellt, dass die Schmelztemperatur weder über- noch unterschritten wird. Das ist vor allem in solchen Fällen wichtig, in denen es möglich ist, dass externe Wärmequellen, wie z.B. Sonneneinstrahlung, das Sichtfenster ebenfalls erwärmen können.

Unterhalb des Sichtfensters ist eine Auffangvorrichtung für ablaufende Flüssigkeit vorzusehen. In Ausgestaltungen kann eine Hintergrundbeleuchtung vorgesehen werden. Diese kann entweder eine aktive Lichtquelle sein, die im Normalfall immer leuchtet, aber durch die Wachsbeschichtung abgedunkelt wird, oder eine passive Lichtquelle, etwa in Form eines Katzenauges, wie es beispielsweise bei Fahrrädern zum Einsatz kommt, und einfallendes Licht zurückspiegelt. Die aktive Lichtquelle kann auch eine geschaltete Lichtquelle sein, deren Schalter durch das ablaufende Wachs oder die Auffangvorrichtung betätigt wird, etwa aufgrund dessen Schwerkraft oder durch Kontakte, die durch festes Wachs isoliert sind, beim Ablaufen der Flüssigkeit jedoch Kontakt bekommen. Die Schaltung kann auch mit einem Alarm gekoppelt werden. Die Lichtquelle kann als sparsame LED mit einer batteriebetriebenen Dauerstromversorgung ausgeführt sein.

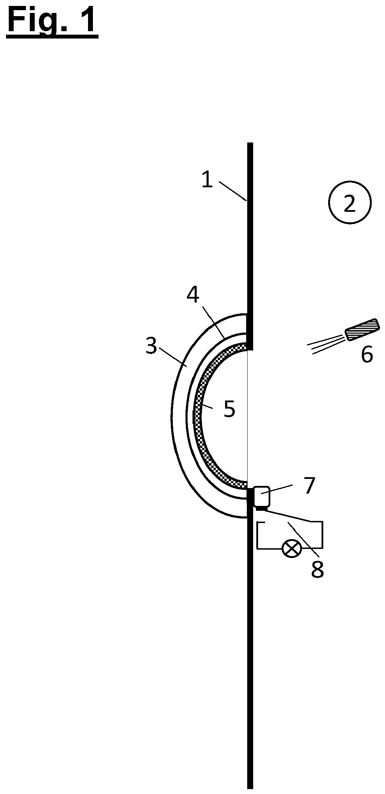

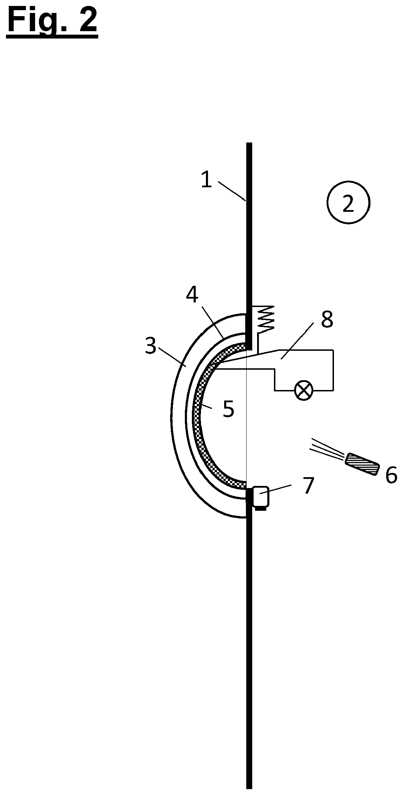

Die Erfindung wird nachfolgend anhand zweier Prinzipskizzen näher erläutert. Hierbei zeigen Fig. 1 und Fig. 2 je ein vereinfachtes Schema des Sichtfensters.

Fig. 1 zeigt eine Außenwand 1 einer Wärmepumpe 2 mit einem eingelassenen Bullauge 3 in der Außenwand 1. In dieses Bullauge ist ein Heizgitter 4 eingelassen, auf der Innenseite des Bullauges 3 ist die Beschichtung 5 aus Wachs aufgebracht. Die Temperatur der Beschichtung wird durch den Infrarotsensor 6 überwacht und das Heizgitter 4 wird so geregelt, dass die Temperatur der Beschichtung 5 ein halbes Grad unter seiner Schmelztemperatur gehalten wird.

Sobald gasförmiges Arbeitsfluid, beispielsweise R290, aus einer Leckage entweicht und sich innerhalb des Gehäuses der Wärmepumpe 2 ausbreitet, trifft es auf die Beschichtung 5 und löst sich in dem Wachs. Dadurch wird der Schmelzpunkt des Wachses herabgesetzt und das Wachs verflüssigt sich. Das verflüssigte Wachs läuft an der Innenfläche herab und wird in der Sammelkammer 7 gesammelt.

Dadurch erhöht sich das Gewicht der Sammelkammer 7 und schließt den Schalter eines Schaltkreises 8 mit einem LED-Licht, welches dann leuchtet und von außen durch das Bullauge gesehen werden kann. Selbstverständlich sind alle diese Ausrüstungen explosionsgeschützt ausgeführt.

Fig. 2 zeigt den gleichen Aufbau wie Fig. 1 mit dem Unterschied, dass der Schalter des Schaltkreises 8 durch Federdrähte, die direkt in der Beschichtung unter mechanischer Spannung angebracht sind, ausgelöst wird. Die Federdrähte werden dabei zunächst leicht auseinandergebogen und so auseinandergebogen in die Wachsschicht hineingedrückt, die Wachsschicht verhindert dabei auch die elektrische Verbindung der beiden Drähte. Sobald die Wachsschicht schmilzt, federn die beiden Drähte zurück und bekommen Kontakt. Dieser Kontakt schließt einen elektrischen Schaltkreis 8 mit einem LED-Licht, welches dann leuchtet und von außen durch das Bullauge gesehen werden kann, wie auch in Fig. 1 beschrieben ist. Selbstverständlich kann dieser Schaltkreis auch so aufgebaut sein, dass das Wachs die Drähte zusammenhält und sein Abfließen den Kontakt auflöst und dadurch der Schaltkreis 8 geschlossen wird.

### Bezugszeichenliste

- 1: Außenwand
- 2: Wärmepumpe
- 3: Bullauge
- 4: Heizgitter
- 5: Beschichtung
- 6: Infrarotsensor
- 7: Sammelkammer
- 8: Schaltkreis

## Patentansprüche

1. Anzeigevorrichtung für ein geschlossenes Wärmepumpengehäuse, in dem ein Wärmepumpenprozess mit einem entzündlichen. kohlenstoffhaltigen Arbeitsfluid betrieben wird,
**dadurch gekennzeichnet, dass**
- ein beheiztes Sichtfenster (3) formschlüssig in einer Aussparung an einer der Außenwände (1) des Wärmepumpengehäuses angebracht ist,
- das Sichtfenster (3) mit dem Gas-Innenraum des Gehäuses in Verbindung steht,
- das Sichtfenster (3) auf der ins Innere des Gehäuses gerichteten Oberfläche mit einer lichtabsorbierenden Feststoff-Beschichtung (5) versehen ist,
- das gasförmige Arbeitsfluid in der Feststoff-Beschichtung (5) löslich ist,
- die Feststoff-Beschichtung (5) beim Lösen des gasförmigen Arbeitsfluides flüssig wird und abläuft,
- und dabei den Blick ins Gehäuseinnere freigibt.

2. Anzeigevorrichtung nach Anspruch 1, **dadurch gekennzeichnet, dass** als Feststoff-Beschichtung (5) ein Wachs vorgesehen wird.

3. Anzeigevorrichtung nach Anspruch 2, **dadurch gekennzeichnet, dass** als Wachs Laurinsäure, Myristinsäure, Stearinsäure oder Palmitinsäure verwendet wird.

4. Anzeigevorrichtung nach einem der Ansprüche 2 bis 3, **dadurch gekennzeichnet, dass** die Beheizung des Sichtfensters (3) auf eine Temperatur bis zwischen 0,5 und 3 Grad Kelvin unter den Schmelzpunkt des Wachses vorgenommen wird.

5. Anzeigevorrichtung nach einem der Ansprüche 1 bis 4, **dadurch gekennzeichnet, dass** die Beheizung des Sichtfensters (3) durch einen Heizdraht (4) oder ein Heizdrahtgitter erfolgt, welches auf das Sichtfenster (3) angebracht oder in dieses eingelassen ist.

6. Anzeigevorrichtung nach einem der Ansprüche 2 bis 5, **dadurch gekennzeichnet, dass** die Oberflächentemperatur des Sichtfensters (3) gemessen und geregelt wird.

7. Anzeigevorrichtung nach einem der Ansprüche 2 bis 6, **dadurch gekennzeichnet, dass** dem Wachs ein dunkler Farbstoff beigemischt wird.

8. Anzeigevorrichtung nach einem der Ansprüche 1 bis 7, dass das Sichtfenster (3) als Bullauge aus Polyamid-Kunststoff ausgeführt ist.

9. Anzeigevorrichtung nach einem der Ansprüche 1 bis 8, **dadurch gekennzeichnet, dass** unterhalb des Sichtfensters (3) eine Auffangvorrichtung (7) angebracht ist.

10. Anzeigevorrichtung nach einem der Ansprüche 2 bis 9, **dadurch gekennzeichnet, dass** die Auffangvorrichtung (7) beim Befüllen mit ablaufendem Wachs durch ihr Eigengewicht einen Schaltkreis (8) schließt, der eine Lichtquelle und/oder einen Alarm einschaltet.

11. Anzeigevorrichtung nach einem der Ansprüche 1 bis 9, **dadurch gekennzeichnet, dass** innerhalb der Beschichtung Drähte unter elektrischer und mechanischer Spannung vorgesehen werden, wobei die mechanische Spannung die Drähte zusammendrückt, die von der Beschichtung in ihrer Position gegen den mechanischen Spannungsdruck festgehalten werden und sich nach Verflüssigung der Beschichtung federnd zusammendrücken und einen elektrischen Schaltkreis (8) schließen, der eine Lichtquelle und/oder einen Alarm einschaltet.
